# NEW EUROPEAN PATENT SPECIFICATION

(11) **EP 0 286 056 B2**
(45) Date of publication and mention of the opposition decision: **11.12.2002**
(45) Mention of the grant of the patent: 05.01.1994
(21) Application number: 88105409.2
(22) Date of filing: 05.04.1988
(51) Int. Cl.: A23K 1/165, A23K 1/18, A23K 1/00

(54) **Procedure for treating feed raw material, feed raw material, and feed mix**
Verfahren zum Behandeln von rohem Futtermaterial, rohes Futtermaterial und Futtermischung
Procédé pour le traitement de matière alimentaire brute, matière alimentaire brute, et mélange d'aliments

(30) Priority: 06.04.1987 FI 871490
(43) Date of publication of application: 12.10.1988
(73) Proprietor: FINNFEEDS INTERNATIONAL LTD., Marlborough, Wiltshire SN8 1AA (GB)
(72) Inventor: Riikonen, Pirkko, SF-02320 Espoo (FI); Tolonen, Jaakko, SF-00370 Helsinki (FI); Inborr, Johan, SF-00550 Helsinki (FI)
(74) Representative: Grünecker, Kinkeldey, Stockmair & Schwanhäusser Anwaltssozietät

(56) References cited:
- EP-A- 0 105 051
- EP-A- 0 257 996
- DE-A- 1 084 123
- GB-A- 2 009 599
- GB-A- 2 111 366
- US-A- 3 640 723
- US-A- 3 687 687
- US-A- 3 701 830
- US-A- 3 753 728
- US-A- 4 376 129
- DERWENT FILE SUPPLIER WPI(I), 1986, AN no. 86-251089 (38), Derwent Publications Ltd, London, GB; & SU-A-1 210 771 (FERMENT RES PRODN) 15-02-1986

## Description

The present invention relates to a process for treating feed raw material containing starch, fibre, protein and/or oil as well as to a feed raw material which contains starch, fibre, protein and/or oil for blending into feed suitable for feeding young animals, for instance piglets.

Animals frequently are not able to fully utilize nutritionally the various feed raw materials contained in foods. Particularly young mammals, piglets for instance, lack in their digestive tract part of the food-decomposing enzymes. When it is desired to boost the feeding during the first weeks of the animals' life already, energy sources have to he added to the feed, for instance glucose, and protein sources, for instance free amino acids. Addition of glucose to pig feed is common, though expensive.

The digestability of the feed may be improved to some extent by subjecting part of the feed raw materials to a water and/or steam heat treatment, a so-called hydrothermal treatment. Various methods have been worked out for hydrothermal treatment, the most common among them being extrusion, and hydrothermal treatment (VOMM). In the case of feed grain, for instance, hydrothermal treatment partly decomposes the polysaccharides in the grain, but it still fails to produce enough glucose in the feed.

Since hydrothermal treatment of the feed raw materials alone is not sufficient to render the feed suitable for use in feeding a young animal, attempts have been made to improve the digestibility by adding enzymes to the feed, which supposedly are lacking in the animal's digestive tract. However, the desired effect has not been achieved owing to the fact that the enzymes are destroyed in the feed-preparing step, during storage and/or in the digestive tract.

In the Finnish patent application No. 863393 a stable enzyme preparation is disclosed which has been achieved by granulating an enzyme mix admixed to a suitable carrier, e.g. to flour. When feed is being prepared, the feed grain, for instance, is treated mechanically and hydrothermally, for instance in an extruder, and the treated grain, other requisite raw materials and the granulated enzyme mix are added to the treated grain e.g. in a mixer. The feed is then for instance pelletized and made crumbly.

The feed thus obtained can be suspended in connection with feeding in warm water, whereby the enzymes are partly activated and process the feed to be better suitable for the animal. The effect of enzymes is then in the first place restricted to conjunction with the use of the feed, that is, to activation taking place in connection with the feed-suspending operation. Furthermore, the extrusion process destroys enzymes contained in the feed raw material that is being treated.

SU-A-1 210 771 discloses a better assimilable feed for young fish, comprising mixing an enyzme combination with bran, mixing the enzyme-bran mixture with feed and granulating at 79°C, steam pressure 2.3 atm, for 15s.

A feed having an improved texture is know from EP-A-0 105 051, wherein the feed raw material is obtained by a combined hydrothermal treatment (extrusion at temperatures up to 15°C for 5s to 15 min) and enzymatic treatment with α-amylase.
EP-A2-0 257 996, which according to Article 54(3) EPC is considered as comprised in the state of the art, discloses the preparation of a feed pre-mix by combining grain of flour having a water content of less than 15% by weight with one or more enzymes in an amount of 1-60%, preferably 10-40%. The pre-mix is held for 10-60 minutes at a certain temperature in order to obtain a moisture content between 18% and 19%. Subsequently, the mixture is pelletized at below 60°C, dried to a final moisture content of approximately 8% and milled or crushed.

It is the object underlying the present invention to provide a novel procedure for treating feed raw material which improves the digestibility and utilizability of the feed raw material as well as to provide a novel feed raw material treated by that procedure having a higher nutritive value than before, and a corresponding feed containing the feed raw material.

According to the present invention the object is achieved with a process for treating feed raw material which contains natural material containing starch, fibre, protein and/or oil, characterized in that an enzyme preparation is added to the feed raw material in an amount of 0.001 to less than 1% by weight, the feed raw material is subjected to combined hydrothermal and enzymatic treatment in a long-time conditioner at a temperature below 60° C, at a moisture content of 15 - 60 % by weight for 10 min to 1 h and the treated feed raw material is granulated and dried to a moisture content of 5 - 30 % by weight, so that the treated feed raw material can be blended into the feed at a concentration of 5 - 95 % by weight.

The moisture content of the feed raw material during the heat treatment is 15 - 60 % by weight, suitably 20 - 50 % by weight, advantageously 25 - 35 % by weight. The treatment takes 10 min to 1 h advantageously 0.5 h. The feed raw material may be agitated in connection with treatment, in order to boost the effect of the enzymes.

During the treatment the own enzymes of the feed raw material and those which have been added thereto are activated. In addition to the decomposing effect of moisture and heat, the activated enzymes also cleave the feed raw material into a form which is better digestible and better utilizable by the animals.

According to the present invention, the feed raw material is granulated, for instance in accordance with the procedure disclosed in the Finnish patent application no. 863393, and dried to a moisture content of 5 - 30 % by weight, advantageously 12 - 14 % by weight, for stabilizing the enzymes and improving the keeping quality of the feed raw material. Preferably the feed raw material consists mainly of grain meal.

The stabilized feed raw material thus obtained can be blended into feed. Thus the present invention also provides a feed which contains the feed raw material at a concentration of 5 - 95 % by weight, suitably 10 - 70 % by weight, advantageously 40 - 50 % by weight, of the total feed weight. It is possible to admix to the feed several feed raw materials prepared by the present procedure, and other feed raw materials known in the art.

The enzymes that are added may consist of the above-mentioned enzyme mix, but the procedure also enables known commercial and/or any other enzyme preparations to be used. The enzyme preparations may be present in solid, dried or liquid state, for instance as aqueous solutions. Solid, dried enzyme preparations may be dissolved and suspended in water prior to being added to the feed raw material. Dry enzyme may also be admixed to the feed raw material before the treatment proper.

For each feed raw material a suitable enzyme preparation may be chosen. It is possible to add to the feed raw material, for instance, cellulases, hemicellulases, glucanase and/or proteases or other enzymes, e.g. those known in connection with feed preparation. Each of these enzymes may be present in an amount of 0.001 to less than 1% by weight, however amounts of 0.001 to 0.05% by weight being preferred for amylases, glucanase and/or proteases. The feed prepared from the feed raw material may contain the enzyme preparation in an amount of 5x10⁻⁵ to 0.95 % by weight. Enzymes may also be added to the feed in the feed mixing step.

The own enzymes of the feed raw material, and the added enzymes, tolerate without destruction the hydrothermal treatment, granulation of the feed raw material and admixing to the other feed raw materials, and the granulation, if any, of the completed feed. The enzymes can be activated at a later time, e.g. by suspending dry feed raw material, or feed therefrom prepared, in warm water in connection with feeding, whereby the enzymatic activity once again begins to decompose particles of the feed raw materials.

The procedure of the invention is simple, advantageous and fast because the hydrothermal and enzymatic treatment can be carried out simultaneously in one and the same apparatus known in itself in the art, for instance in a long-time conditioner.

Combined hydrothermal and enzymatic treatment also enables such inexpensive feed raw materials to be used which the animal cannot utilize without said treatment. The procedure is applicable to all and any feed raw materials which can be hydrothermally treated at a comparatively low temperature.

The feed raw material of the invention contains the hydrothermally and enzymatically treated natural material containing starch, fibre, protein and/or oil in an amount of 70 - 95 % by weight, advantageously 80 - 90 % by weight and the enzyme preparation in an amount of 0.001 to less than 1% by weight, of the total feed raw material weight. The treated natural material contains cleavage products of that natural material which have been formed in the hydrothermal and enzymatic treatment.

The feed prepared from the feed raw material contains at least one hydrothermally and enzymatically. treated natural material in the amount of 5-95% by weight, advantageously 10-70% by weight, suitably 40-50% by weight, of the completed feed weight.

The feed may also contain several hydrothermally and enzymatically treated natural materials, in which case the treated natural materials have been separately blended into the other feed raw materials. The feed may also contain hydrothermally and enzymatically treated natural materials of which the treatment has been carried out simultaneously.

The feed of the invention is particularly suitable to be used as piglet feed because young piglets as a rule lack grain-decomposing enzymes. In that case the enzyme preparation in feed raw material of the invention containing grain, e.g. barley, suitably consists e.g. of cellulases, hemicellulases, amylases, proteases and/or glucanases, as set forth in the foregoing.

The feed of the invention may however also be used in feeding other animals, for instance calves.

The invention is described in detail in the following with the aid of embodiment examples.

### EXAMPLE 1

In a procedure conforming to the invention, the hydrothermal and enzymatic treatment of the feed raw material is carried out as shown in Fig. 1, wherein the flow chart of an industrial feed raw material line for treating feed raw material by the procedure of the invention is depicted. The feed raw material composed of one or several natural materials is conducted into a mixing silo 2, from there to scales 3, and further to a mixer 4. To the mixer 4 are also conducted the aqueous enzyme solutions, from the tank 5. If needed, other substances and/or steam may also be added into the mixer. Also water may be separately added.

From the mixer, the raw material is transported to a long-time conditioner 6. In the conditioner, water and enzyme can exert their effect on the feed raw material. The feed raw material has therefore been suitably crushed or ground so that there will be absorption of enzymes and water. The suitable grinding e.g. for grain is 1-5 mm. The delay in the long-time conditioner is advantageously 10 min to 1 h, for instance 1/2 h. During this delay, heat, moisture and the enzymes inherent in the raw material and those that have been added cleave particles of the raw material so that they become better suited for the animal nutritionally. The treatment may be enhanced by agitation. The temperature in the conditioner is suitably such that the enzymes will not be destroyed. If required, steam may be conducted into the conditioner.

After the conditioner 6, the treated feed raw material is granulated, using the granulator 7. After granulation, the granulated feed raw material is dried in a dryer 8. e.g. with the aid of air blowing. Finally, the granules are cooled and crushed in the units 10 and 11.

The granulated feed raw material is conducted toward storage and shipment, 12, or the raw material is transported to the feed line proper, where e.g. in a main mixer 13 blending of the treated feed raw material into the other raw materials 14 takes place. It is further possible, if required, to add to the feed which is being prepared, enzyme mix, for instance mixed with a carrier. From the main mixer 13 the feed is conducted to a pelleting and crumbling unit 15. The completed feed is packaged and shipped.

The enzymes contained in the granular feed raw material treated by the procedure of the invention are preserved without destruction in the mixing and granulation steps of the feed line proper. The enzymes also tolerate storage and transport well in the completed, granular feed.

### EXAMPLE 2

In an experiment, comparison was instituted between conventional piglet feed and feed which contained hydrothermally and enzymatically treated feed raw material of the invention. Feeds 2 and 4 contained hydrothermally and enzymatically treated feed raw material according to the invention (barley). Feeds 1 and 3 contained barley which had been hydrothermally treated only. To feeds 3 and 4 had been added granulated enzyme mix. Tables 1-4 state the feed compositions used in the tests, and the results.

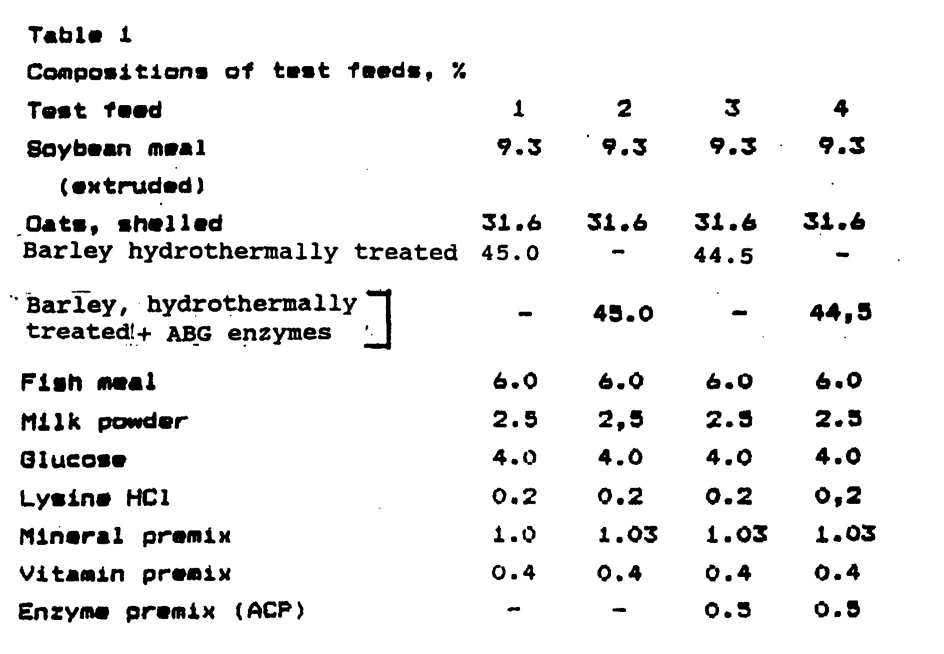

**Table 2**

| Chemical composition of the feeds, % | | | | |
|---|---|---|---|---|
| Test feed | 1 | 2 | 3 | 4 |
| Dry matter | 89.0 | 88.3 | 88.7 | 88.9 |
| Crude protein | 18.0 | 18.8 | 18.7 | 18.9 |
| Crude fibre | 3.6 | 3.6 | 3.6 | 3.6 |
| Nitrogen-free extractives | 56.0, | 55.5 | 55.4 | 55.8 |
| Ash | 7.7 | 6.9 | 7.6 | 7.2 |
| ME, MJ/kg (available energy calculated) | 13.0 | 13.0 | 13.0 | 13.0 |

**Table 3**

| Concentration of all reducing sugars and glucose in the feed, and enzyme activities | | | | |
|---|---|---|---|---|
| Feed | All reducing sugars, g/kg | Glucose g/kg | β-glucanase Units/kg^{a} | Cellulase FPU/kg^{b} |
| 1 | 113 | 6 | 4.745 | 390 |
| 2 | 117 | 37 | 5.250 | 840 |
| 3 | 153 | 13 | 6.660 | 670 |
| 4 | 206 | 44 | 6.460 | 1.090 |

| | | | | |
|---|---|---|---|---|
| ^{a} 1 Unit = 1 µmol liberated reducing sugars/min expressed as glucose equivalents, when using β-glucanase for substrate, incubating at 30 ° C and pH 5.0 | | | | |
| ^{b} 1 Filter Paper Unit = 1 µmol liberated reducing sugars/min expressed as glucose equivalents, when using filter paper for substrate, incubating at 50 ° C and pH 4.8 | | | | |

**Table 4**

| Growth results (by least squares method) | | | | |
|---|---|---|---|---|
| Age in weeks Test feed | 1 | 2 | 3 | 4 |
| Daily growth increment, g | | | | |
| 2 - 5 | 173 | 202 | 208 | 199 |
| 5 - 9 | 236 | 257^{a} | 198^{b} | 208 |
| 2 - 9 | 211 | 234 | 191 | 203 |
| | | | | |

| Feed consumption, kg | | | | |
|---|---|---|---|---|
| 2 - 5 | 0.43 | 0.51 | 0.61 | 0.50 |
| 5 - 9 | 13.4^{a} | 12.1^{ab} | 9.6^{c} | 10.8^{bc} |
| 2 - 9 | 13.8^{a} | 12.7^{ab} | 10.2^{c} | 11.3^{bc} |
| | | | | |

| Feed consumption/growth | | | | |
|---|---|---|---|---|
| 5 - 9 | 1.97 | 1.70 | 1.92 | 1.93 |
| 2 - 9 | 1.30 | 1.13 | 1.10 | 1.15 |
| | | | | |

| | | | | |
|---|---|---|---|---|
| ^{a}, ^{b}, ^{c} Values significantly different (P<0.05) (P<0.05) | | | | |

The results reveal clearly that the best growth results were achieved with Feeds 2 and 4.

### EXAMPLE 3

Examples of enzymes and enzyme quantities to be added to feed raw materials which are to be treated hydrothermally and enzymatically

| Enzyme | 1 | 2 | 3 | 4 | 5 | 6 | 7 | 8 |
|---|---|---|---|---|---|---|---|---|
| Cellulase | 0.1 | 0.08 | | 0.03 | 0.05 | | 0.05 | 0.07 |
| Hemicellulase | | 0.6 | 0.5 | | 0.005 | | 0.4 | |
| Beta glucanase | | | | 0.02 | | | | |
| Alpha amylase | | | | 0.07 | | 0.1 | | |
| Glucoamylase | | | | 0.05 | | 0.02 | | |
| Protease | 0.05 | 0.03 | 0.03 | | | | 0.03 | 0.04 |
| 1: Soybean | | | | | | | | |
| 2: Turnip rape | | | | | | | | |
| 3: Garden pea | | | | | | | | |
| 4: Barley | | | | | | | | |
| 5: Oats | | | | | | | | |
| 6: Shelled oats | | | | | | | | |
| 7: Oat husks | | | | | | | | |
| 8: Wheat bran | | | | | | | | |

### EXAMPLE 4

Compositions of feed for piglets and pigs, containing various feed raw materials hydrothermically and enzymatically treated according to the invention.

| Test feed | 1 | 2 | 3 | 4 | 5 | 6 | 7 |
|---|---|---|---|---|---|---|---|
| Raw materials, % | | | | | | | |
| Milk powder | 2.5 | 2.5 | 2.5 | 2.5 | 2.5 | 2.5 | 2.5 |
| Fish meal | 6.5 | 6.5 | 6.5 | 6.5 | 6.5 | 6.5 | 6.5 |
| Matured crushed soybean | 9.5 | 9.5 | - | 9.5 | - | - | 9.5 |
| Oatmeal, matured | 42.3 | - | 42.3 | 42.3 | 42.3 | 42.3 | 42.3 |
| Steamed oats | 31.0 | 31.0 | 31.0 | - | 31.0 | 31.0 | 31.0 |
| Soybean, hydrothermally and enzymat, treated | - | - | 9.5 | - | - | - | - |
| Barley, hydrothermally and enzymat. treated | - | 42.3 | - | - | - | - | - |
| Oats, hydrothermally and enzymat. treated | - | - | - | 31.0 | - | - | - |
| Turnip rape, hydrotherm. and enzymat, treated | - | - | - | - | 9.5 | - | - |
| Garden pea, hydrotherm. and enzymat. treated | - | - | - | - | - | 9.5 | - |
| Wheat bran, hydrotherm. and enzymat. treated | - | - | - | - | - | - | 10.0 |
| Glucose | 4.0 | 4.0 | 4.0 | 4.0 | 4.0 | 4.0 | 4.0 |
| Phosphate | 1.8 | 1.8 | 1.8 | 1.8 | 1.8 | 1.8 | 1.8 |
| Lime | 0.4 | 0.4 | 0.4 | 0.4 | 0.4 | 0.4 | 0.4 |
| Mineral mix | 0.34 | 0.34 | 0.34 | 0.34 | 0.43 | 0.34 | 0.34 |
| Lysine | 0.16 | 0.16 | 0.16 | 0.16 | 0.16 | 0.16 | 0.16 |
| Vitamin mix | 1.0 | 1.0 | 1.0 | 1.0 | 1.0 | 1.0 | 1.0 |
| Enzyme mix | 0.5 | 0.5 | 0.5 | 0.5 | 0.5 | 0.5 | 0.5 |

## Claims

1. A process for treating feed raw material which contains natural material containing starch, fibre, protein and/or oil, **characterized in that** an enzyme preparation is added to the feed raw material in an amount of 0.001 to less than 1% by weight, the feed raw material is subjected to combined hydrothermal and enzymatic treatment in a long-time conditioner at a temperature below 60°C, at a moisture content of 15 - 60 % by weight for 10 min to 1 h and the treated feed raw material is granulated and dried to a moisture content of 5 - 30 % by weight, so that the treated feed raw material can be blended into the feed at a concentration of 5 - 95 % by weight.

2. The process according to claim 1, **characterized in that** the granulated feed raw material is dried to a moisture content of 12 - 14 % by weight.

3. The process according to claims 1 or 2, **characterized in that** the enzyme preparation contains enzymes selected from at least one of cellulases, hemicellulases, amylases, glucanase and proteases.

4. The process according to claims 1 and 3, **characterized in that** the enzyme preparation contains 0.001 - 0.05 % by weight amylases, glucanases and/or proteases.

5. The process according to claims 1 or 2, **characterized in that** the moisture content of the feed raw material is 20 - 50 % by weight.

6. The process according to claim 5, **characterized in that** the moisture content of the feed raw material is 25 - 35 % by weight.

7. The process according to claims 5 or 6, **characterized in that** the treatment time is 0.5 h.

8. The process according to any one of claims 1 to 7 **characterized in that** the feed raw material consists mainly of grain meal.

9. A feed raw material which contains natural material containing starch, fibre, protein and/or oil, for blending into a feed, **characterized in that** the feed raw material has been treated according to the process of any one of claims 1 to 8.

10. A feed which contains the feed raw material according to claim 9 at a concentration of 5 to 95 % by weight

11. The feed according to claim 10, **characterized in that** it contains the feed raw material in an amount of 10 - 70 % by weight.

12. The feed according to claim 11, **characterized in that** it contains the feed raw material in an amount of 40 - 50 % by weight.

13. The feed according to any of claims 10 to 12 **characterized in that** it contains 5 X 10⁻⁵ to 0.95 % by weight of enzyme preparation.

## Patentansprüche

1. Verfahren zum Behandeln eines Futterrohmaterials, welches natürliches Material, enthaltend Stärke, Fiber, Protein und/oder Öl, enthält, **dadurch gekennzeichnet, daß** eine Enzym-Zubereitung dem Futterrohmaterial in einer Menge von 0,001 bis weniger als 1 Gew.-% zugefügt wird, das Futterrohmaterial einer kombinierten hydrothermalen und enzymatischen Behandlung in einer Langzeitkonditioniervorrichtung bei einer Temperatur unter 60°C bei einem Feuchtigkeitsgehalt von 15 bis 60 Gew.-% 10 min bis 1 h ausgesetzt wird, und das behandelte Futterrohmaterial granuliert und zu einem Feuchtigkeitsgehalt von 5 bis 30 Gew.-% getrocknet wird, so daß das behandelte Futterrohmaterial in ein Futter mit einer Konzentration von 5 bis 95 Gew.-% eingemischt werden kann.

2. Verfahren nach Anspruch 1, **dadurch gekennzeichnet, daß** das granulierte Futterrohmaterial zu einem Feuchtigkeitsgehalt von 12 bis 14 Gew.-% getrocknet wird.

3. Verfahren nach Anspruch 1 oder 2, **dadurch gekennzeichnet, daß** die Enzymzubereitung Enzyme enthält, die ausgewählt sind aus mindestens einem von Zellulasen, Hemizellulasen, Amylasen, Glukanase und Proteasen.

4. Verfahren nach Anspruch und 3, **dadurch gekennzeichnet, daß** die Enzymzubereitung 0,001 bis 0,05 Gew.-% Amylasen, Glukanasen und/oder Proteasen enthält.

5. Verfahren nach Anspruch 1 oder 2, **dadurch gekennzeichnet, daß** der Feuchtigkeitsgehalt des Futterrohmaterials 20 bis 50 Gew.-% beträgt.

6. Verfahren nach Anspruch 5, **dadurch gekennzeichnet, daß** der Feuchtigkeitsgehalt des Futterrohmaterials 25 bis 35 Gew.-% beträgt.

7. Verfahren nach Anspruch 5 oder 6, **dadurch gekennzeichnet, daß** die Behandlungszeit 0,5 h ist.

8. Verfahren nach einem der Ansprüche 1 bis 7, **dadurch gekennzeichnet, daß** das Futterrohmaterial hauptsächlich aus Getreidemehl besteht.

9. Futterrohmaterial, das natürliches Material, enthaltend Stärke, Fiber, Protein und/oder Öl, enthält, zum Einmischen in ein Futter, **dadurch gekennzeichnet, daß** das Futterrohmaterial gemäß dem Verfahren nach einem der Ansprüche 1 bis 8 behandelt worden ist.

10. Futter, das das Futterrohmaterial nach Anspruch 9 in einer Konzentration von 5 bis 95 Gew.-% enthält.

11. Futter nach Anspruch 10, **dadurch gekennzeichnet, daß** es das Futterrohmaterial in einer Menge von 10 bis 70 Gew.-% enthält.

12. Futter nach Anspruch 11, **dadurch gekennzeichnet, daß** es das Futterrohmaterial in einer Menge von 40 bis 50 Gew.-% enthält.

13. Futter nach einem der Ansprüche 10 bis 12, **dadurch gekennzeichnet, daß** es 5 x 10⁻⁵ bis 0,95 Gew.-% der Enzymzubereitung enthält.

## Revendications

1. Procédé de traitement de matière alimentaire brute qui contient une matière naturelle contenant de l'amidon, une fibre, une protéine et/ou de l'huile, **caractérisé en ce qu'**une préparation d'enzymes est ajoutée dans la matière alimentaire brute en une quantité de 0,001 à moins de 1% en poids, la matière alimentaire brute est soumise à un traitement combiné hydrothermal et enzymatique dans un conditionneur de longue durée à une température en dessous de 60°C, à une teneur en humidité de 15 à 60°C en poids pendant 10 min à 1 h et la matière alimentaire brute traitée est mise sous forme de granulés et séchée à une teneur en humidité de 5 à 30% en poids, de sorte que la matière alimentaire brute traitée peut être mélangée dans l'aliment à une concentration de 5 à 95% en poids.

2. Procédé selon la revendication 1, **caractérisé en ce que** la matière alimentaire brute mise sous forme de granulés est séchée à une teneur en humidité de 12 à 14% en poids.

3. Procédé selon les revendications 1 ou 2, **caractérisé en ce que** la préparation d'enzymes contient des enzymes choisies parmi au moins l'une de cellulases, hémicellulases, amylases, glucanase et protéases.

4. Procédé selon les revendications 1 et 3, **caractérisé en ce que** la préparation d'enzymes contient 0,001 à 0,05% en poids d'amylases, glucanases et/ou protéases.

5. Procédé selon les revendications 1 ou 2, **caractérisé en ce que** la teneur en humidité de la matière alimentaire brute est de 20 à 50% en poids.

6. Procédé selon la revendication 5, **caractérisé en ce que** la teneur en humidité de la matière alimentaire brute est de 25 à 35% en poids.

7. Procédé selon les revendications 5 ou 6, **caractérisé en ce que** la durée du traitement est de 0,5 h.

8. Procédé selon l'une quelconque des revendications 1 à 7, **caractérisé en ce que** la matière alimentaire brute est principalement constituée de farine de grain.

9. Matière alimentaire brute qui contient une matière naturelle contenant de l'amidon, une fibre, une protéine et/ou de l'huile, destinée au mélange dans un aliment, **caractérisée en ce que** la matière alimentaire brute est traitée selon le procédé de l'une quelconque des revendications 1 à 8.

10. Aliment qui contient la matière alimentaire brute selon la revendication 9 à une concentration de 5 à 95% en poids.

11. Aliment selon la revendication 10, **caractérisé en ce qu'**il contient la matière alimentaire brute en une quantité de 10 à 70% en poids.

12. Aliment selon la revendication 11, **caractérisé en ce qu'**il contient la matière alimentaire brute en une quantité de 40 à 50% en poids.

13. Aliment selon l'une quelconque des revendications 10 à 12, **caractérisé en ce qu'**il contient 5x10⁻⁵ à 0,95% en poids de préparation d'enzymes.
